# EUROPÄISCHE PATENTANMELDUNG

(11) **EP 1 132 606 A2**
(43) Veröffentlichungstag der Anmeldung: **12.09.2001**
(21) Anmeldenummer: 01104857.6
(22) Anmeldetag: 28.02.2001
(51) Int. Cl.: F02D 41/40, F02D 41/38, F02D 35/02

(54) **Verfahren zur Regelung eines Verbrennungsmotors**

(30) Priorität: 10.03.2000 DE 10011630
(71) Anmelder: Delphi Technologies, Inc., Troy, MI 48007 (US)
(72) Erfinder: Glavmo, Masgnus P., 8272 Mamer (LU); DuFaux, Henri M.A.F., 6723 Habay-La-Vieille (BE); Wesquet, Alain, 8545 Niederpallen (LU); Engel, Joseph A., 4671 Oberkorn (LU)
(74) Vertreter: Manitz, Finsterwald & Partner

(57) **Zusammenfassung**

Die Erfindung betrifft ein Verfahren zur Regelung eines Verbrennungsmotors, insbesondere eines Dieselmotors. Bei dem Verfahren wird eine Folge von Meßwerten bestimmt, die eine Vorverbrennung beschreibt, welche durch eine vor einer Haupteinspritzung stattfindenden Voreinspritzung verursacht ist. Anschließend wird die Folge von Meßwerten ausgewertet und auf Grundlage der Auswertung zumindest einer der Einspritzparameter der nachfolgenden Voreinspritzung entsprechend nachgeregelt.

## Beschreibung

Die Erfindung betrifft ein Verfahren zur Regelung eines Verbrennungsmotors, insbesondere eines Dieselmotors.

Bei Verbrennungsmotoren besteht das Problem, daß bei einer zeitlich ungünstigen Zündung des Luft-Kraftstoff-Gemisches im Zylinder Druckspitzen und plötzliche Druckänderungen entstehen, die zu unerwünschten Geräuschentwicklungen führen. Dieses Problem tritt insbesondere bei Dieselmotoren auf, bei denen sich der eingespritzte Kraftstoff bei einer vorgegebenen Verdichtung selbst entzündet, wobei der Zündzeitpunkt von einer Vielzahl von Faktoren abhängt, wie beispielsweise der Temperatur im Inneren des Zylinders, der eingespritzten Menge an Kraftstoff oder dem Einspritzzeitpunkt, wodurch eine exakte Einstellung des Zündzeitpunktes erschwert ist und folglich die Vermeidung unerwünschter Motorengeräusche nur mit großem Aufwand erreicht werden kann.

So ist es bekannt, bei Dieselmotoren den Einspritzvorgang in eine Voreinspritzung, bei der eine geringe Menge an Kraftstoff in den Zylinder eingespritzt wird, und eine Haupteinspritzung zu untergliedern, bei der die für die Erzeugung des Drehmomentes erforderliche Kraftstoffmenge eingespritzt wird. Durch den vor der Haupteinspritzung eingespritzten Kraftstoff, der sich während des Kompressionshubes des Kolbens entzündet, soll das Innere des Zylinders vor der Haupteinspritzung angewärmt werden, wodurch der während der Haupteinspritzung eingespritzte Kraftstoff zumindest teilweise verdampft und sich besser im Inneren des Zylinders verteilt. Die bessere Verteilung des Luft-Kraftstoff-Gemisches führt wiederum zu einer verbesserten Verbrennung, bei der verglichen mit einer Haupteinspritzung ohne Voreinspritzung geringere Druckspitzen entstehen, da die Flammenfront während der Verbrennung weniger plötzlich entsteht und mit geringerer Geschwindigkeit im Inneren des Zylinders wandert. Bei der Voreinspritzung muß jedoch sichergestellt sein, daß die Vorverbrennung bereits abgeschlossen ist, wenn die Haupteinspritzung beginnt, da andernfalls durch den noch brennenden Kraftstoff der Vorverbrennung der während der Haupteinspritzung eingespritzte Kraftstoff sich vorzeitig entzünden würde, wodurch die Leistung des Dieselmotors abnehmen würde. Aus diesem Grund wird die Voreinspritzung bezüglich des Zeitpunktes der Haupteinspritzung so weit verschoben, daß sichergestellt ist, daß die Vorverbrennung bereits abgeschlossen ist, wenn mit der Haupteinspritzung begonnen wird. Bei den bekannten Motorregelungen ist ferner noch zu bemerken, daß bisher die Wirkung der Voreinspritzung auf die nachfolgende Haupteinspritzung nicht kontrolliert wird, so daß die Gefahr besteht, daß bei einer Voreinspritzung mit ungünstigem Verlauf die Geräuschentwicklung im Verbrennungsmotor verstärkt und nicht reduziert wird.

Es ist Aufgabe der Erfindung, ein Verfahren zur Regelung eines Verbrennungsmotors, insbesondere eines Dieselmotors, anzugeben, durch dessen Einsatz die Entstehung schlagartiger Verbrennungsvorgänge, die zu Druckspitzen führen, wirksam vermieden wird.

Die Erfindung löst die Aufgabe durch ein Verfahren mit den Merkmalen nach Anspruch 1 und insbesondere dadurch, daß bei dem Verfahren zumindest in einem der Zylinder des Verbrennungsmotors während einer Vorverbrennung, die durch eine vor einer Haupteinspritzung stattfindenden Voreinspritzung verursacht ist, eine die Vorverbrennung beschreibende Folge von Meßwerten bestimmt wird, die Folge von Meßwerten ausgewertet wird, und zumindest einer der Einspritzparameter der nachfolgenden Voreinspritzung entsprechend der Auswertung der ermittelten Meßwerte nachgeregelt wird.

Bei dem erfindungsgemäßen Verfahren wird der Verlauf der Vorverbrennung erfaßt und durch die ermittelten Meßwerte dokumentiert. Aus der Folge von Meßwerten kann anschließend der Verlauf der Vorverbrennung kontrolliert und, sofern erforderlich, zumindest eine der Einspritzparameter der nachfolgenden Voreinspritzung nachgeregelt werden. Durch die Überwachung des Verlaufes der Vorverbrennung und durch die Nachregelung der Einspritzparameter der Voreinspritzung ist es möglich, einerseits auf sich ändernde Betriebsbedingungen des Verbrennungsmotors einzugehen, andererseits die für jeden Verbrennungsmotor individuellen Laufeigenschaften des Verbrennungsmotors, die sich über die Lebensdauer des Verbrennungsmotors verändern, mit zu berücksichtigen. So kann mit dem erfindungsgemäßen Verfahren beispielsweise ermittelt werden, ob, zu welchem Zeitpunkt und in welcher Menge Kraftstoff in den Zylinder eingespritzt worden ist. Durch diese Informationen kann anschließend die Voreinspritzung so nachgeregelt werden, daß die geringstmögliche Menge an Kraftstoff mit möglichst geringem zeitlichen Abstand zur Haupteinspritzung in den Zylinder eingespritzt wird, so daß eine Minderung der Motorleistung, die durch eine sehr frühe Voreinspritzung großer Mengen an Kraftstoff entsteht, wie sie bisher üblich ist, nicht mehr auftritt. Durch die Regelung der Vorverbrennung mit Hilfe des erfindungsgemäßen Verfahrens kann insbesondere die schlagartige Verbrennung von Kraftstoff während der Haupteinspritzung verhindert werden, die zu hohen Druckspitzen und damit zu Motorgeräuschen führt, da die Voreinspritzung individuell an die Haupteinspritzung angepaßt werden kann.

Vorteilhafte Weiterbildungen der Erfindung ergeben sich aus der nachfolgenden Beschreibung, der Zeichnung und den Unteransprüchen.

So wird bei einer bevorzugten Weiterbildung des Verfahrens vorgeschlagen, grundsätzlich zu erfassen, ob eine Vorverbrennung vor der eigentlichen Haupteinspritzung erfolgt ist oder nicht. Auf diese Weise wird sichergestellt, daß die Haupteinspritzung des Kraftstoffs zumindest annähernd immer in einem durch einen Vorverbrennung erwärmten Zylinder erfolgt, um eine gleichmäßige Verbrennung des während der Haupteinspritzung in den Zylinder geförderten Kraftstoffs zu erreichen. Zur Bestimmung, ob eine Vorverbrennung erfolgt ist oder nicht, sind bei dem Verfahren verschiedene Möglichkeiten gegeben, die gegebenenfalls auch gleichzeitig oder in Abhängigkeit von den Betriebsbedingungen des Verbrennungsmotors zu unterschiedlichen Zeitpunkten vorgenommen werden.

Bei einer bevorzugten Ausführungsform der Weiterbildung wird vorgeschlagen, die Meßwerte der Folge untereinander zu vergleichen und bei einer Mindestabweichung der Meßwerte voneinander von dem Vorliegen einer Vorverbrennung auszugehen. Durch den direkten Vergleich der Meßwerte untereinander kann auf die Verwendung eventueller Referenzwerte verzichtet werden.

Alternativ ist es möglich, alle Meßwerte der Folge oder den Maximalwert der Folge mit mindestens einem Grenzwert zu vergleichen, bei dessen Überschreiten durch mindestens einen der Meßwerte bzw. durch den Maximalwert der Folge von dem Vorliegen einer Vorverbrennung ausgegangen wird.

Eine weitere Möglichkeit besteht darin, durch Integration der Folge von Meßwerten über einen vorgegebenen Zeitraum der Vorverbrennung einen Integrationswert zu berechnen, der gleichfalls mit einem Grenzwert verglichen wird.

Durch die zuvor beschriebenen Ausführungsformen des Verfahrens kann das grundsätzliche Vorliegen einer Vorverbrennung ermittelt werden, so daß bei der nachfolgenden Voreinspritzung zumindest einer der Einspritzparameter so verändert werden kann, daß bei Fehlen einer Vorverbrennung beispielsweise die während der Voreinspritzung einzuspritzende Kraftstoffmenge erhöht wird.

Damit eine noch genauere Nachregelung der nachfolgenden Voreinspritzung möglich wird, und um eine Überschneidung der Vorverbrennung mit dem Zeitpunkt der Haupteinspritzung zu vermeiden, wird ferner vorgeschlagen, den Beginn und gegebenenfalls auch die Dauer der Vorverbrennung zu ermitteln.

Des weiteren ist es von Vorteil, wenn aus der Folge von Meßwerten die Verzögerung bestimmt wird, die zwischen dem Beginn der Voreinspritzung und dem Beginn der Vorverbrennung auftritt. Zu diesem Zweck wird beispielsweise aus der Folge von Meßwerten ein Beginn der Vorverbrennung bestimmt, und mit dem bekannten Voreinspritzzeitpunkt, bei dem der Kraftstoff für die Vorverbrennung eingespritzt wurde, verrechnet. Durch Ermittlung der Verzögerung zwischen dem Einspritzzeitpunkt der Voreinspritzung und dem Beginn der Vorverbrennung kann die Voreinspritzung so nachgeregelt werden, daß der zeitliche Abstand zwischen dem Beginn der Vorverbrennung und dem Beginn der Haupteinspritzung so groß ist, daß eine Entzündung des während der Haupteinspritzung eingespritzten Kraftstoffes vor dem gewünschten Zündzeitpunkt nicht erfolgt.

Bei einer bevorzugten Weiterbildung des erfindungsgemäßen Verfahrens wird vorgeschlagen, nicht nur die Vorverbrennung sondern zusätzlich auch zumindest einen Teil der durch die Haupteinspritzung verursachten Hauptverbrennung zu überwachen, in dem auch für die Hauptverbrennung zumindest zeitweise die Folge von Meßwerten gebildet wird.

Aus der Folge von Meßwerten kann ein auf den Zeitablauf der erfaßten Vorverbrennung und den Ablauf der gegebenenfalls erfaßten Hauptverbrennung bezogener Signalverlauf dargestellt werden, aus dem der Verlauf der Vorverbrennung und gegebenenfalls der Verlauf der Hauptverbrennung unmittelbar abgelesen werden kann.

So wird vorzugsweise aus der Steigung einer der Signalflanken des die Hauptverbrennung darstellenden Abschnittes der Signalkurve ermittelt, ob eine Vorverbrennung vorlag. Dies geschieht, indem der Maximalwert der Steigung mit einem Schwellwert verglichen wird. Lag eine Vorverbrennung vor, liegt die maximale Steigung unter dem Schwellwert. Trat dagegen keine Vorverbrennung auf, liegt die maximale Steigung über dem Schwellwert, wodurch angezeigt wird, daß eine vergleichsweise schlagartige Verbrennung während der Haupteinspritzung eingespritzten Kraftstoffes erfolgt ist. Aus dem Verlauf der Signalkurve, insbesondere der Steigung der Signalflanken, kann also auch indirekt abgelesen werden, ob ein schlagartiger Druckanstieg während der Hauptverbrennung aufgetreten ist, der zu Motorgeräuschen führt. Auch hier kann durch entsprechendes Nachregeln der Einspritzparameter der Voreinspritzung die Vorverbrennung verstärkt oder auch gegebenenfalls reduziert werden.

Eine weitere Möglichkeit aus dem Verlauf der Signalkurve zu ermitteln, ob eine Vorverbrennung vorlag, besteht darin den Betrag der maximalen Amplitude des die Hauptverbrennung darstellenden Abschnittes mit einem vorgegebenen Maximalwert zu vergleichen. Liegt der Betrag der maximalen Amplitude unter dem Maximalwert, lag eine Vorverbrennung vor, während bei Fehlen einer Vorverbrennung der Betrag der maximalen Amplitude über dem Maximalwert liegt. Des weiteren besteht bei dieser Ausführungsform des Verfahrens die Möglichkeit, zu ermitteln, ob während der Hauptverbrennung so hohe Temperaturen entstanden sind, daß verstärkt Stickoxide gebildet wurden, indem die Amplitude mit einem Stickoxidgrenzwert verglichen wird, wobei bei einem Übersteigen des Stickoxidgrenzwertes durch die Amplitude von der verstärkten Bildung von Stickoxiden ausgegangen werden kann.

Des weiteren ist es möglich, aus dem Signalverlauf auch den Beginn der Hauptverbrennung zu ermitteln, aus dem die Verzögerung zwischen dem Beginn der Hauptverbrennung und dem Beginn der Haupteinspritzung berechnet werden kann, mit deren Hilfe wiederum bestimmt werden kann, ob eine Vorverbrennung erfolgt ist oder nicht.

Ferner besteht die Möglichkeit, den zeitlichen Abstand zwischen dem Ende der Vorverbrennung und dem Beginn der Hauptverbrennung zu ermitteln, um den zeitlichen Abstand zwischen dem Ende der Vorverbrennung und dem Beginn der Hauptverbrennung durch entsprechendes Nachregeln der Einspritzparameter für die Voreinspritzung zu vergrößern bzw. zu verkleinern.

Die Vorverbrennung und gegebenenfalls auch die Nachverbrennung wird durch eine Folge von Meßwerten beschrieben, die die Leitfähigkeit im Verbrennungsgas während der Vorverbrennung und/oder während der Hauptverbrennung darstellen. Die Leitfähigkeit im Verbrennungsgas wird bestimmt, indem der Anteil an positiv oder der Anteil an negativ geladenen Teilchen im Verbrennungsgas ermittelt wird.

Nachfolgend wir die Erfindung anhand eines Ausführungsbeispiels unter Bezugnahme auf die Zeichnung näher erläutert. Darin zeigen:
- Fig. 1: ein Diagramm, in dem eine Leitfähigkeits-Meßkurve und eine den Druckverlauf im Zylinder während eines Verbrennungsvorgangs anzeigende Druckkurve bezogen auf den Kurbelwellenwinkel dargestellt sind, und
- Fig. 2: ein Diagramm, in dem Leitfähigkeits-Meßkurven bei verschiedenen Einspritzparametern und die zugehörigen Druckkurven bezogen auf den Kurbelwellenwinkel dargestellt sind.

Bei dem nachfolgend beschriebenen Ausführungsbeispiel wird das erfindungsgemäße Verfahren bei einem Dieselmotor eingesetzt, um die durch die Voreinspritzung verursachte Vorverbrennung und die durch die Haupteinspritzung verursachte Nachverbrennung so aufeinander abzustimmen, daß die Bildung von Druckspitzen während der Verbrennung reduziert ist. Zur Auswertung der Verbrennungsvorgänge werden Signalkurven aufgenommen, die die Verbrennungsvorgänge unmittelbar beschreiben. Hierzu wird bei dem beschriebenen Ausführungsbeispiel die Leitfähigkeit des im Zylinder befindlichen Verbrennungsgases während der Vor- und Hauptverbrennung basierend auf dem Anteil positiv geladener Teilchen im Verbrennungsgas gemessen, wie nachfolgend erläutert wird.

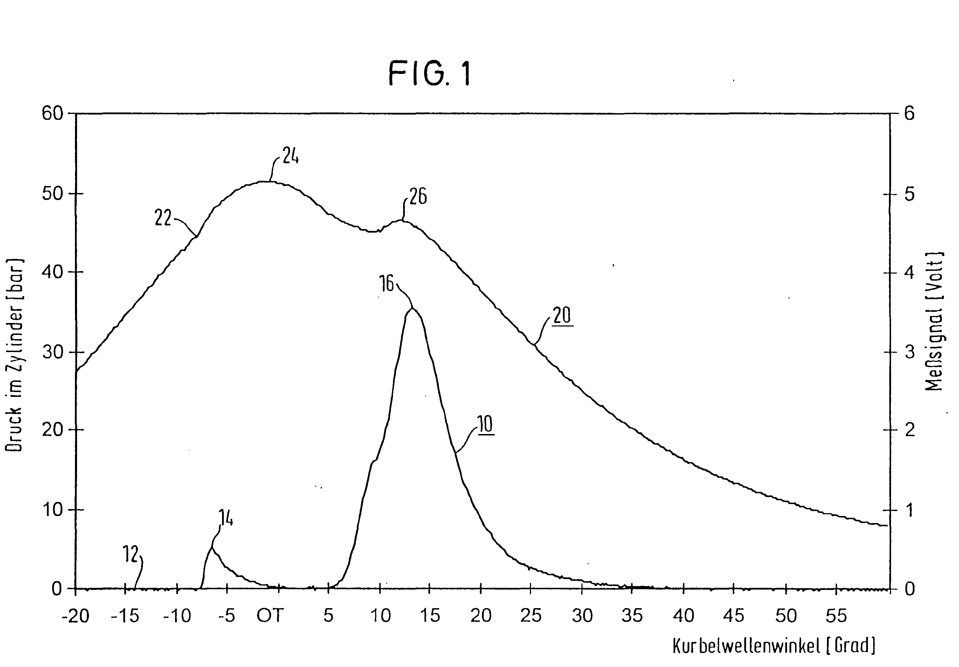

Zum Messen der Leitfähigkeit des im Zylinder befindlichen Verbrennungsgases wird eine Glühkerze des jeweiligen Zylinders des Dieselmotors verwendet. Die Glühkerze des jeweiligen Zylinders ist mit einem Referenzwiderstand in Reihe geschaltet und mit der Innenwand des Zylinders leitend verbunden. Zur Bestimmung der Leitfähigkeit des Verbrennungsgases im jeweiligen Zylinder auf Grundlage der im Verbrennungsgas enthaltenen positiv geladenen Teilchen wird an die Glühkerze während eines Teils des Verdichtungshubes und eines Teils des Arbeitshubes eine negative Spannung angelegt. Durch die während der Verbrennung entstehenden positiv geladenen Teilchen ändert sich die Leitfähigkeit des Verbrennungsgases zwischen der Glühkerze und der Innenwand des Zylinders, wodurch sich die am Referenzwiderstand abfallende Spannung ändert, die gemessen und zur Auswertung verstärkt wird. Die verschiedenen Spannungswerte werden als Folge von Leitfähigkeitswerten in einem Speicher abgespeichert. Als Beispiel ist in Fig. 1 eine erste Meßsignalkurve 10 dargestellt, die die Änderung der Leitfähigkeitswerte bezogen auf den Kurbelwellenwinkel zeigt, wobei die Leitfähigkeitswerte auf dem Anteil positiv geladener Teilchen im Verbrennungsgas basieren.

Nachfolgend wird unter Bezugnahmen auf die Fig. 1 der Verlauf der ersten Meßsignalkurve 10 näher erläutert. Zu Beginn des Überwachungszeitraumes bei einem Kurbelwellenwinkel von etwa -20° vor dem oberen Totpunkt OT des Kolbens zeigt die erste Meßsignälkurve 10 einen Wert von etwa 0 Volt. Ab diesem Kurbelwellenwinkel von etwa -20° vor dem oberen Totpunkt OT des Kolbens beginnt die Motorsteuerung des Dieselmotors mit einer Voreinspritzung, bei der eine Menge von 2,4 mm³ Dieselkraftstoff in den Zylinder eingespritzt wird, um das Innere des Zylinders vor der eigentlichen Haupteinspritzung zu erwärmen. Dies zeigt sich in der ersten Meßkurve 10 durch die kleinen Signalschwankungen 12 im Signalverlauf.

Ab einem Kurbelwellenwinkel von etwa -7° vor dem oberen Totpunkt OT entzündet sich der im Zylinder befindliche Kraftstoff, wodurch die Leitfähigkeit des Verbrennungsgases zunimmt, wie der ersten Meßsignalkurve 10 durch die erste Signalspitze 14 zu entnehmen ist. Die Signalspitze 14 der ersten Meßsignalkurve 10 flacht nach einem plötzlichen Anstieg auf etwa 0,5 Volt mit sehr steiler Flanke kontinuierlich wieder ab, bis sie bei einem Kurbelwellenwinkel von etwa -10° vor dem oberen Totpunkt OT etwa wieder 0 Volt zeigt. Bei einem Kurbelwellenwinkel von etwa 4° nach dem oberen Totpunkt OT des Kolbens wird die eigentliche Haupteinspritzung des Kraftstoffes in den Zylinder vorgenommen, bei der 8,2 mm³ Dieselkraftstoff eingespritzt werden. Durch die Voreinspritzung wurde, wie zuvor bereits erläutert, der Innenraum des Zylinders vorgewärmt, so daß der während der Haupteinspritzung eingespritzte Kraftstoff zumindest teilweise verdampft und sich gleichmäßig im Innenraum des Zylinders verteilt. Bei einem Kurbelwellenwinkel von etwa 5° nach dem oberen Totpunkt OT des Kolbens entzündet sich der Kraftstoff im Inneren des Zylinders, wodurch sich die Leitfähigkeit des Verbrennungsgases erneut verändert, wie die zweite Signalspitze 16 in der ersten Meßsignalkurve 10 zeigt, die ihr Maximum bei einem Kurbelwellenwinkel von etwa 14° nach dem oberen Totpunkt OT des Kolbens besitzt. Die erste Meßsignalkurve 10 steigt dabei auf einen Wert von etwa 3,5 Volt, wie durch die zweite Signalspitze 16 gezeigt wird. Anschließend fällt die erste Meßsignalkurve 10 sanft ab, bis sie bei einem Kurbelwellenwinkel von etwa 40° nach dem oberen Totpunkt OT des Kolbens gleichfalls zumindest annähernd 0 Volt erreicht. In der ersten Meßsignalkurve 10 beschreibt also die erste Signalspitze 14 den Verlauf der Vorverbrennung, während die zweite Signalspitze 16 den Verlauf der Hauptverbrennung dokumentiert.

Des weiteren ist in Fig. 1 der sich während der durch die erste Meßsignalkurve 10 beschriebenen Verbrennungsvorgänge im Zylinder ändernde Druck in Form einer Druckkurve 20 dargestellt. Wie die Druckkurve 20 zeigt, nimmt der Druck im Zylinder ausgehend von einem Wert von etwa 27 bar beginnend bei einem Kurbelwellenwinkel von -20° vor dem oberen Totpunkt OT des Kolbens aufgrund der Kompressionswirkung des sich nach oben bewegenden Kolbens kontinuierlich zu. Ab einem Kurbelwellenwinkel von etwa -7° vor dem oberen Totpunkt OT des Kolbens, bei dem die Vorverbrennung beginnt, nimmt die Steigung der Druckkurve 20 an dem Punkt 22 durch den durch die Vorverbrennung zusätzlich verursachten Druck etwas zu. Am oberen Totpunkt OT des Kolbens zeigt die Druckkurve 20 ihr Maximum 24, bei dem im Zylinder ein Druck von etwa 52 bar herrscht. Durch die Absinkbewegung des Kolbens während des Arbeitshubes nimmt der Druck bis zu einem Kurbelwellenwinkel von etwa 8° nach dem oberen Totpunkt OT des Kolbens wieder kontinuierlich ab, wie die Druckkurve 20 zeigt. Ab diesem Kurbelwellenwinkel von etwa 8° nach dem oberen Totpunkt OT des Kolbens erhöht sich der Druck im Inneren des Zylinders durch die bereits ablaufende Hauptverbrennung, wie die Signalspitze 26 der Druckkurve 20 zeigt. Nachdem die Hauptverbrennung ihr Maximum erreicht hat, wie in der ersten Meßsignalkurve 10 durch die zweite Signalspitze 16 angedeutet ist, zeigt die Druckkurve 20 eine sanften Druckabfall, bis sie bei einem Kurbelwellenwinkel von etwa 60° nach dem oberen Totpunkt des Kolbens einen Wert von etwa 8 bar zeigt.

Wie den beiden Kurven 10 und 20 im Diagramm von Fig. 1 zu entnehmen ist, zeigt die Vor- und Haupteinspritzung, wie sie durch die erste Meßsignalkurve 10 beschrieben ist, einen Druckverlauf im Zylinder des Dieselmotors, bei dem zwar Druckspitzen entstehen, diese jedoch verhältnismäßig sanft ohne Bildung eines plötzlichen Druckabfalls und erneutem Druckanstieges ineinander übergehen. Bei einem Druckverlauf, wie er durch die Druckkurve 20 dargestellt ist, zeigt der Dieselmotor eine verhältnismäßig geringe Geräuschentwicklung.

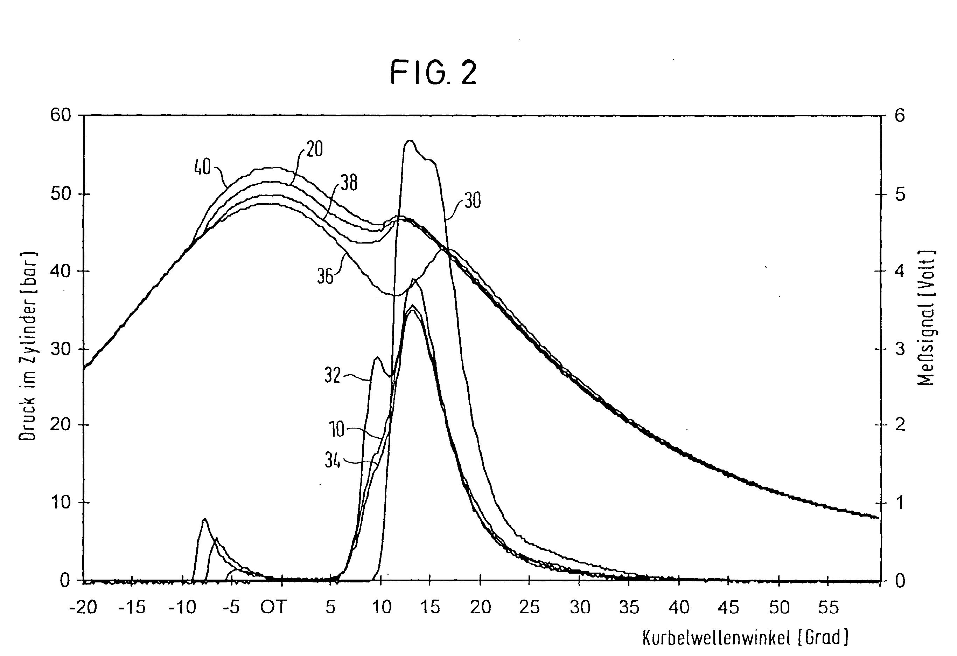

In Fig. 2 ist ein Diagramm dargestellt, in dem zusätzlich zu der ersten Meßsignalkurve 10 drei weitere Meßsignalkurven 30, 32 und 34 für verschiedene Einspritzbedingungen sowie die jeweils zugehörigen Druckkurven 36, 38 und 40 bezogen auf den Kurbelwellenwinkel gezeigt sind, wobei in der nachfolgenden Tabelle die Einspritzbedingungen aufgeführt sind.

| Kurve | Voreinspritzung | | Haupteinspritzung | |
|---|---|---|---|---|
| | Menge [mm³] | Zeitpunkt [°] | Menge [mm³] | Zeitpunkt [°] |
| 10 | 2,4 mm³ | -20° vor OT | 8,2 mm³ | 4° vor OT |
| 30 | keine Voreinspritzung | | 10,75 mm³ | 4° vor OT |
| 32 | 1,5 mm³ | -18° vor OT | 9,2 mm³ | 4° vor OT |
| 34 | 3,0 mm³ | -22° vor OT | 7,7 mm³ | 4° vor OT |

Bei dem Einspritzvorgang, der durch die zweite Meßsignalkurve 30 beschrieben wird, erfolgt keine Voreinspritzung. Vielmehr wird die gesamte Menge von 10,75 mm³ an Dieselkraftstoff bei einem Kurbelwellenwinkel von 4° vor dem oberen Totpunkt OT des Kolbens eingespritzt. Als Folge zeigt die zweite Meßsignalkurve 30 nur eine einzige sehr hohe Signalspitze, so daß die zugehörige zweite Druckkurve 36 eine entsprechend hohe Signalspitze zeigt, bei der ein Druck von über 40 bar im Zylinder entsteht, nachdem der Druck bereits auf 35 bar abgefallen war. Durch diese innerhalb weniger Kurbelwellenwinkel von nicht einmal 7° auftretenden starken Druckänderung im Zylinder entstehen unerwünschte Motorgeräusche während des Betriebs des Dieselmotors.

Die dritte Meßsignalkurve 32 beschreibt einen Einspritzvorgang, bei dem bei einem Kurbelwellenwinkel von -18° vor dem oberen Totpunkt OT des Kolbens eine Menge von etwa 1,5 mm³ Dieselkraftstoff eingespritzt wurde. Dies hat eine äußerst geringe Vorverbrennung bei einem Kurbelwellenwinkel von etwa -6° vor dem oberen Totpunkt zur Folge, die, wie Fig. 2 zeigt, allenfalls eine geringe Erhöhung des Maximums der zugehörigen dritten Druckkurve 38 verursacht. Anschließend wird bei einem Kurbelwellenwinkel von etwa 4° vor dem oberen Totpunkt OT des Kolbens eine Menge von etwa 9, 2 mm³ Dieselkraftstoff eingespritzt, die sich bei einem Kurbelwellenwinkel von etwa 5° nach dem oberen Totpunkt OT des Kolbens entzündet und eine erste Signalspitze bei einem Kurbelwellenwinkel von etwa 7° nach dem oberen Totpunkt OT des Kolbens und eine zweite Spitze bei einem Kurbelwellenwinkel von etwa 15° nach dem oberen Totpunkt OT des Kolbens zeigt. Diese Doppelspitze während der Hauptverbrennung führt zu einer verglichen mit dem vorherigen Druckverlauf 20 deutlichen Erhöhung des Drucks im Inneren des Zylinders innerhalb einer Kolbenbewegung mit einem Kurbelwellenwinkel von 2°, wobei der Druck um etwa 4 bar zunimmt, wie die Druckkurve 38 zeigt. Auch hier entstehen durch die plötzliche Druckänderung bezogen auf den Kurbelwellenwinkel während des Betriebes des Dieselmotors unerwünschte Motorgeräusche.

Die vierte Meßsignalkurve 34 beschreibt einen Verbrennungsvorgang, bei dem bei einem Kurbelwellenwinkel von etwa -22° vor dem oberen Totpunkt OT des Kolbens eine Menge von etwa 3,0 mm³ Dieselkraftstoff eingespritzt wurde. Verglichen mit der ersten Meßsignalkurve 10, die insbesondere auch in Fig. 1 dargestellt ist, zeigt die vierte Meßsignalkurve 34 bereits bei einem Kurbelwellenwinkel von -7° vor dem oberen Totpunkt OT des Kolbens ihre erste Signalspitze, die durch die Vorverbrennung verursacht ist. Gleichfalls nimmt im Druckverlauf der zugehörigen vierten Druckkurve 40 der Druck zu, so daß das Maximum bei einem Wert von etwa 53 bar liegt. Die Haupteinspritzung erfolgt gleichfalls bei einem Kurbelwellenwinkel von 4° vor dem oberen Totpunkt OT des Kolbens mit einer Menge von etwa 7,7 mm³ Dieselkraftstoff. Der während der Haupteinspritzung eingespritzte Dieselkraftstoff zündet bei einem Kurbelwellenwinkel von etwa 6° nach dem oberen Totpunkt OT des Kolbens, wobei die Hauptverbrennung ihr Maximum bei einem Wert von etwa 3,5 V bei einem Kurbelwellenwinkel von etwa 14° nach dem oberen Totpunkt OT des Kolbens erreicht. Wie der vierten Druckkurve 40 zu entnehmen ist, zeigt der Druckverlauf auch hier eine Signalspitze, die sich an das Maximum anschließt, wobei jedoch der Übergang vom Abfall des Maximums zur nachfolgenden Druckspitze allenfalls bei 1 bar innerhalb einer Kurbelwellenwinkeländerung von etwa 2° liegt. Bei einem Verlauf des Drucks im Inneren des Zylinders, wie er durch die vierte Druckkurve 40 dargestellt ist, kommt es allenfalls zu den üblichen, nicht störenden Motorgeräuschen, die während des Betriebes eines Dieselmotors nicht zu vermeiden sind.

Mit dem erfindungsgemäßen Verfahren werden nun die Einspritzparameter, nämlich die einzuspritzende Menge an Dieselkraftstoff und der Einspritzzeitpunkt so geregelt, daß die durch die Hauptverbrennung verursachte Druckänderung nach dem während des oberen Totpunktes des Kolbens auftretenden Maximum bezogen auf die Zeit bzw. den Kurbelwellenwinkel mit möglichst geringer Steigung auftreten. Ein derartiger Druckverlauf ist in der ersten Druckkurve 20, die durch die Voreinspritzung, wie sie in der ersten Meßsignalkurve 10 dargestellt ist, und durch die vierte Druckkurve 40 beschrieben, die bei einem Einspritzvorgang entsprechend der vierten Meßsignalkurve 34 entsteht.

Sollte die Druckänderung im Zylinder während der Verbrennung des Dieselkraftstoffes einen dem Verlauf der zweiten Druckkurve 36 bzw. der dritten Druckkurve 38 entsprechenden Verlauf zeigen, werden bei dem erfindungsgemäßen Verfahren die Einspritzparameter der Voreinspritzung und gegebenenfalls die Einspritzparameter der Haupteinspritzung entsprechend nachgeregelt. Hierzu stehen verschiedene Möglichkeiten zur Verfügung.

Einerseits besteht die Möglichkeit, aus den ermittelten Leitfähigkeitswerten, die die Meßsignalkurven 10, 30, 32 und 34 bilden, unmittelbar abzulesen, ob eine Voreinspritzung und eine Vorverbrennung erfolgt ist oder nicht. Dies kann beispielsweise dann auftreten, wenn zwar die Motorregelung ein kurzfristiges Einspritzen von Kraftstoff für die Vorverbrennung einstellt, jedoch aufgrund von Fehlfunktionen oder Verunreinigungen des betreffenden Einspritzventils nicht oder allenfalls unzureichend Kraftstoff in den Zylinder eingespritzt wird. Sofern keine Voreinspritzung erfolgt ist, zeigt der Verlauf der Meßsignalkurve in etwa den Verlauf der zweiten Meßsignalkurve 30, wobei eine der zweiten Druckkurve 36 entsprechende Druckänderung im Zylinder auftritt, die zu Motorgeräuschen führt. Sobald von der Motorregelung festgestellt wird, daß keine Vorverbrennung erfolgt ist, regelt die Motorregelung die Einspritzparameter der nachfolgenden Voreinspritzungen nach, so daß beispielsweise eine größere Kraftstoffmenge eingespritzt wird. Anschließend erfaßt die Motorregelung erneut die Leitfähigkeitsänderung im Verbrennungsgas des Zylinders, um zu ermitteln, ob eine Vorverbrennung nach Änderung der Einspritzparameter der Voreinspritzung erfolgt ist. Auf diese Weise wird ein geschlossener Regelkreis gebildet, bei dem sichergestellt werden kann, daß eine Voreinspritzung mit nachfolgender Vorverbrennung während des Motorbetriebes auftritt.

Des weiteren ist es möglich, aus dem Verlauf der Meßsignalkurve zu ermitteln, ob der Zündzeitpunkt der Hauptverbrennung in Richtung der Vorverbrennung verschoben worden ist. Dies ergibt sich insbesondere dadurch, daß bei einer Vorverbrennung, bei der im Inneren des Zylinders eine ausreichend hohe Temperatur erreicht wird, der während der Haupteinspritzung eingespritzte Kraftstoff durch die hohen Temperaturen entsprechend schnell verdampft und gleichzeitig auch früh zündet. Durch die frühe Zündung der Hauptverbrennung entsteht die Druckerhöhung, die durch die Hauptverbrennung im Inneren des Zylinders verursacht wird, bereits zu einem früheren Zeitpunkt, so daß das Maximum des Druckverlaufes, das bei dem oberen Totpunkt OT des Kolbens auftritt zwar abfällt aber bereits nach kurzer Zeit in die durch die Hauptverbrennung verursachte Druckspitze übergeht, so daß die Druckänderungen im Druckverlauf verhältnismäßig gering sind.

Aus den Meßsignalkurven 10, 30, 32 und 34 bzw. den Leitfähigkeitswerten kann unmittelbar der Beginn der Hauptverbrennung ermittelt werden, indem die Meßwerte mit einem vorgegebenen Schwellwert verglichen werden. Übersteigt eine vorgegebene Anzahl von aufeinander folgenden Meßwerten den Schwellwert, hat die Verbrennung begonnen. Indem der Meßwert ermittelt wird, der als erster größer war als der Schwellwert, wird der Beginn der Verbrennung eindeutig definiert. Aus dem ermittelten Beginn der Verbrennung regelt die Motorregelung die Einspritzparameter der Voreinspritzung entsprechend nach, wenn der Zündzeitpunkt der Hauptverbrennung zu spät erfolgt. Hierzu besteht beispielsweise die Möglichkeit die Menge an während der Voreinspritzung einzuspritzendem Kraftstoff zu erhöhen oder den Einspritzzeitpunkt der Voreinspritzung in Richtung des oberen Totpunktes OT des Kolbens zu verschieben.

Ferner läßt sich auch hier aus dem Verlauf der Verbrennung ablesen, wenn der Zündzeitpunkt der Hauptverbrennung sehr spät erfolgt, daß keine oder allenfalls eine geringe Vorverbrennung erfolgt ist, die eine nicht ausreichende Erwärmung des Zylinderinneren bewirkt hat.

Des weiteren läßt sich aus der Meßsignalkurve ermitteln, ob eine Vorverbrennung vorlag, indem die Steigung der Meßsignalkurve während der Hauptverbrennung untersucht wird. Zeigt die Meßsignalkurve eine verhältnismäßig geringe Steigung, wie sie beispielsweise in den beiden Meßsignalkurven 10 und 34 gezeigt ist, ist dies ein Hinweis auf das Vorliegen einer Vorverbrennung, da durch die Erwärmung des Zylinderinneren der eingespritzte Kraftstoff verdampft, auf diese Weise gleichmäßig im Inneren des Zylinders verteilt wird und folglich schon früher zündet, wobei die entstehende Flammenfront mit vergleichsweise geringerer Geschwindigkeit durch den Zylinder wandert und folglich die Meßsignalkurve eine flachere Steigung zeigt, wie beispielsweise den Meßsignalkurven 10 und 34 zu entnehmen ist.

Liegt dagegen keine Vorverbrennung vor, wird der Kraftstoff während der Haupteinspritzung in den nicht vorgewärmten Zylinder eingespritzt, so daß das Luft-Kraftstoff-Gemisch erst ab einer bestimmten Verdichtung so weit erwärmt ist, daß es sich selbst entzündet. Die Entzündung und Verbrennung des im Zylinder enthaltenen Kraftstoffs erfolgt in einem solchen Fall schlagartiger, so daß die Meßsignalkurve eine stärkere Steigung zeigt, wie sie in den beiden Meßsignalkurven 30 und 32 dargestellt ist.

Sollte die Motorregelung eine Steigung ermitteln, die über einem vorgegebenen Schwellwert liegt, wird dies als Fehlen einer Vorverbrennung gewertet, so daß die Motorregelung die Einspritzparameter entsprechend nachregelt.

Des weiteren besteht die Möglichkeit, aus der maximalen Amplitude der Meßsignalkurve zu ermitteln, ob eine Vorverbrennung vorlag oder nicht. Zeigt die Meßsignalkurve eine vergleichsweise hohe Amplitude, wie sie beispielsweise in der zweiten Meßsignalkurve 30 zu sehen ist, bedeutet dies, daß der Kraftstoff innerhalb sehr kurzer Zeit schlagartig verbrannt ist, wodurch sich die Leitfähigkeit im Verbrennungsgas entsprechend schnell ändert. Bei einem derartigen Verlauf der Meßsignalkurve ist davon auszugehen, daß allenfalls eine geringe Vorverbrennung erfolgt ist, die eine ausreichende Erwärmung des Zylinders nicht ermöglicht hat.

Zeigt dagegen die Meßsignalkurve eine vergleichsweise geringe Maximalamplitude, wie sie in den beiden Meßsignalkurven 10 und 34 zu sehen ist, ist dies als Hinweis darauf zu verstehen, daß der Zylinder durch die Voreinspritzung und die damit verursachte Vorverbrennung ausreichend hoch erwärmt worden ist.

Die Motorregelung kann ferner aus dem Verlauf der Meßsignalkurven 10, 30, 32 und 34 ermitteln, wie die Vorverbrennung abgelaufen ist und gegebenenfalls die Einspritzparameter der nachfolgenden Voreinspritzungen entsprechend verändern. Ferner läßt sich auch noch die Dauer der Vorverbrennung bestimmen, indem ermittelt wird, wie lang die ermittelten Leitfähigkeitswerte über einem vorgegebenen Grenzwert liegen.

Das zuvor beschriebene Verfahren wird insbesondere bei Dieselmotoren eingesetzt, wobei die Leitfähigkeitswerte durch Ermitteln des Anteils an positiv geladenen Teilchen im Verbrennungsgas bestimmt worden sind. Alternativ ist es auch möglich, die Leitfähigkeit im Verbrennungsgas auf Grundlage der im Verbrennungsgas enthaltenden negativ geladenen Teilchen zu erfassen. Das erfindungsgemäße Verfahren läßt sich bei entsprechender Abwandlung auch für Benzinmotoren einsetzen, um beispielsweise den Verbrennungsverlauf und auch den Zündzeitpunkt bestimmen und erfassen zu können.

### Bezugszeichenliste

- 10: erste Meßsignalkurve
- 12: Signalschwankungen
- 14: erste Signalspitze
- 16: zweite Signalspitze

- 20: erste Druckkurve
- 22: Punkt
- 24: Maximum
- 26: Signalspitze
- 28: Druckabfall

- 30: zweite Meßsignalkurve
- 32: dritte Meßsignalkurve
- 34: vierte Meßsignalkurve
- 36: zweite Druckkurve
- 38: dritte Druckkurve
- 40: vierte Druckkurve

## Patentansprüche

1. Verfahren zur Regelung eines Verbrennungsmotors, insbesondere eines Dieselmotors, wobei bei dem Verfahren
zumindest in einem der Zylinder des Verbrennungsmotors während einer Vorverbrennung, die durch eine vor einer Haupteinspritzung stattfindenden Voreinspritzung verursacht ist, eine die Vorverbrennung beschreibende Folge von Meßwerten bestimmt wird,
die Folge von Meßwerten ausgewertet wird, und
zumindest einer der Einspritzparameter der nachfolgenden Voreinspritzung entsprechend der Auswertung der ermittelten Meßwerte nachgeregelt wird.

2. Verfahren nach Anspruch 1, bei dem aus der Folge von Meßwerten bestimmt wird, ob eine Vorverbrennung erfolgt ist, indem die Meßwerte der Folge untereinander verglichen werden und bei einer Mindestabweichung der Meßwerte voneinander von dem Vorliegen einer Vorverbrennung ausgegangen wird.

3. Verfahren nach Anspruch 1 oder 2, bei dem aus der Folge von Meßwerten bestimmt wird, ob eine Vorverbrennung erfolgt ist, indem die Meßwerte der Folge oder deren Maximalwert mit mindestens einem Grenzwert verglichen werden, bei dessen Überschreiten durch mindestens einen der Meßwerte bzw. durch den Maximalwert der Folge von dem Vorliegen einer Vorverbrennung ausgegangen wird.

4. Verfahren nach Anspruch 1, 2 oder 3, bei dem aus der Folge von Meßwerten durch Integration über einen vorgegebenen Zeitraum der Vorverbrennung ein Integrationswert berechnet wird, und bei dem durch Vergleich des Integrationswertes mit einem Grenzwert bestimmt wird, ob eine Vorverbrennung erfolgt ist, wobei eine Vorverbrennung angenommen wird, wenn der Integrationswert über dem Grenzwert liegt, und das Fehlen einer Vorverbrennung angenommen wird, wenn der Integrationswert unter dem Grenzwert liegt.

5. Verfahren nach einem der Ansprüche 1 bis 4, bei dem aus der Folge von Meßwerten der Beginn und/oder die Dauer der Vorverbrennung bestimmt wird.

6. Verfahren nach einem der Ansprüche 1 bis 5, bei dem die Dauer der Vorverbrennung ermittelt wird, indem der Zeitraum ermittelt wird, bei dem die Meßwerte der Folge über einem vorgegebenen Grenzwert liegen.

7. Verfahren nach einem der vorhergehenden Ansprüche, bei dem aus der Folge von Meßwerten ein Beginn der Vorverbrennung bestimmt wird, und bei dem aus dem Beginn der Vorverbrennung und einem bekannten Voreinspritzzeitpunkt, bei dem der Kraftstoff für die Vorverbrennung eingespritzt wurde, eine Verzögerung zwischen dem Beginn der Voreinspritzung und dem Beginn der Vorverbrennung berechnet wird.

8. Verfahren nach einem der vorhergehenden Ansprüche, bei dem während der Vorverbrennung und während einer durch die Haupteinspritzung verursachten Hauptverbrennung zumindest zeitweise die Folge von Meßwerten gebildet wird.

9. Verfahren nach Anspruch 8, bei dem die die Hauptverbrennung abbildende Folge von Meßwerten ausgewertet wird, und bei dem zumindest einer der Einspritzparameter der nachfolgenden Haupteinspritzung entsprechend der Auswertung der Meßwerte nachgeregelt wird.

10. Verfahren nach einem der vorhergehenden Ansprüche, bei dem aus der Folge von Meßwerten ein auf den zeitlichen Ablauf der Vorverbrennung und/oder den Ablauf der Hauptverbrennung bezogener Signalverlauf dargestellt wird.

11. Verfahren nach Anspruch 10, bei dem zur Darstellung des Verlaufes der Vorverbrennung und/oder des Verlaufes der Hauptverbrennung der Verlauf von Signalflanken im Signalverlauf ausgewertet wird, wobei eine steil ansteigende Signalflanke den Ablauf einer schlagartigen Verbrennung anzeigt, während eine sanft ansteigende Signalflanke den Beginn einer kontinuierlich zunehmenden Verbrennung definiert.

12. Verfahren nach Anspruch 11, bei dem aus der Steigung einer der Signalflanken des die Hauptverbrennung darstellenden Abschnitts der Signalkurve, vorzugsweise aus der Steigung der ersten Signalflanke, ermittelt wird, ob eine Vorverbrennung vorlag, indem die maximale Steigung der Signalflanke mit einem Schwellwert verglichen wird, wobei bei Vorliegen einer Vorverbrennung die maximale Steigung unter dem Schwellwert liegt, und bei Fehlen einer Vorverbrennung die maximale Steigung über dem Schwellwert liegt.

13. Verfahren nach Anspruch 11 oder 12, bei dem aus der maximalen Amplitude des die Hauptverbrennung darstellenden Abschnitts der Signalkurve ermittelt wird, ob eine Vorverbrennung vorlag, indem der Betrag der maximalen Amplitude mit einem vorgegebenen Maximalwert verglichen wird, wobei bei Vorliegen einer Vorverbrennung der Betrag der maximalen Amplitude unter dem Maximalwert liegt, und bei Fehlen einer Vorverbrennung der Betrag der maximalen Amplitude über dem Maximalwert liegt.

14. Verfahren nach einem der Ansprüche 8 bis 13, bei dem aus dem aus der Folge von Meßwerten bestimmten Beginn der Hauptverbrennung und einem bekannten Haupteinspritzzeitpunkt, bei dem der Kraftstoff für die Hauptverbrennung eingespritzt wurde, eine Verzögerung zwischen dem Beginn der Haupteinspritzung und dem Beginn der Hauptverbrennung berechnet wird.

15. Verfahren nach Anspruch 14, bei dem aus der Verzögerung zwischen dem Beginn der Haupteinspritzung und dem Beginn der Hauptverbrennung das Vorliegen einer Vorverbrennung durch Vergleich der Verzögerung mit einem vorgegebenen Zeitraum bestimmt wird, wobei bei einer kurzen Verzögerung, die kürzer ist als die vorgegebene Zeitdauer, von dem Vorliegen einer Vorverbrennung ausgegangen wird, und wobei bei einer langen Verzögerung, die länger ist als die vorgegebene Zeitdauer, von dem Fehlen einer Vorverbrennung ausgegangen wird.

16. Verfahren nach einem der Ansprüche 8 bis 15, bei dem aus der Folge von Meßwerten der Abstand zwischen dem Ende der Vorverbrennung und dem Beginn der Hauptverbrennung ermittelt wird.

17. Verfahren nach einem der vorhergehenden Ansprüche, bei dem mit der Folge von Meßwerten die Leitfähigkeit im Verbrennungsgas während der Vorverbrennung und/oder während der Hauptverbrennung erfaßt wird, indem der Anteil an positiv oder der Anteil an negativ geladenen Teilchen im Verbrennungsgas ermittelt wird.

18. Verfahren nach einem der vorhergehenden Ansprüche, bei dem der Verlauf der Vorverbrennung und/oder der Verlauf der Hauptverbrennung ausgewertet wird, um die Geräuschentstehung während des Betriebes im Verbrennungsmotor, insbesondere die Entstehung von Nagelgeräuschen im Dieselmotor, zu bestimmen, und bei dem die Voreinspritzung und/oder die Haupteinspritzung derart nachgeregelt wird, daß während der Verbrennung entstehende Druckspitzen zur Verminderung der Geräuschentwicklung reduziert sind.
